(19) Europäisches Patentamt
European Patent Office
Office européen des brevets

(11) **EP 4 492 010 A1**

(12) **EUROPEAN PATENT APPLICATION**

(43) Date of publication:
**15.01.2025   Bulletin 2025/03**

(21) Application number: **23461626.6**

(22) Date of filing: **09.07.2023**

(51) International Patent Classification (IPC):
**G01C 21/34** (2006.01)     **B60W 40/09** (2012.01)

(52) Cooperative Patent Classification (CPC):
**G01C 21/3469; B60W 40/09; G01C 21/3484;
G01C 21/3492**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Uniwersytet Zielonogórski
65-417 Zielona Góra (PL)**

(72) Inventors:
• **Ostrowski, Kacper
  65-533 Zielona Gora (PL)**
• **Paczkowski, Jacek
  67-100 Nowa Sol (PL)**
• **Kramek, Krzysztof
  65-124 Zielona Gora (PL)**
• **Mrugalski, Marcin
  65-128 Zielona Gora (PL)**

(74) Representative: **JD&P Patent Attorneys
Joanna Dargiewicz & Partners
ul. Mysliborska 93A/50
03-185 Warszawa (PL)**

(54) **METHOD FOR DETERMINING THE ENERGY-OPTIMAL ROUTE FOR A ROAD VEHICLE**

(57)     The object of the present invention is a method for determining an optimal route by a road vehicle, which comprises the steps of retrieving information about the current location of the vehicle from the location module; retrieving information from the user about where he wants to go; information on possible routes is extracted from a road map provided with additional information on road constraints such as speed limits resulting from road signs and traffic regulations, chicanes, pedestrian crossings, intersections, level crossings; information on vehicle characteristics such as make, engine power, acceleration, energy expenditure is extracted from a database of vehicles, engines, transmissions, etc., on the basis of the information obtained, the optimal route is determined, with the optimal route is minimising the energy cost of the journey.

## Description

The present invention relates to a method for determining an energy-optimal route for a road vehicle. The method is implemented with the use of a road map with information to calculate the amount of energy required to travel a given route dependent on traffic signs, chicanes, pedestrian crossings and intersections.

## Field of invention

Modern road maps do not include information on road signs, pedestrian crossings or chicanes designed to force a reduction in the speed of a vehicle. However, these road features can be very important in terms of the energy required to travel the road.

## State of the art

Japanese patent application JP2009067350A describes a way to estimate the energy consumption of a vehicle. It calculates the probability that a vehicle will stop at a traffic light or pedestrian crossing, although it is not used to determine the optimal route.

US patent application US2009254266A1 discloses a method of calculating a route to minimise energy consumption. Each road section is assigned an interference weighting factor associated with the energy consumption of passing an obstacle, after which a route is selected from a number of potential routes based on the lowest overall route energy consumption weighting factor. However, this method does not take into account either the vehicle properties or the driving style of the driver concerned.

The aim of the present invention was to develop a method of determining an energy-optimal route using a road map that would enable a more accurate calculation of the amount of energy (either electricity or fuel) required to travel a given route, based not only on the presence of obstacles along the route, but also on the properties of the vehicle and the driving style of the driver concerned.

## The summary of the invention

This objective is achieved by the object of the present invention, which, is a method for determining the optimal route by a road vehicle, which comprises the steps where information about the current location of the vehicle is retrieved from the location module; information about where the user wants to go is retrieved from the user; information about possible routes is extracted from a road map provided with additional information about road constraints such as speed limits resulting from road signs and traffic regulations, chicanes, pedestrian crossings, intersections, level crossings; information about the characteristics of the vehicle such as make, engine power, acceleration, energy expenditure is extracted from a database of vehicles, engines, transmissions, etc., on the basis of the information obtained, the optimal route is determined, with the optimal route is minimising the energy cost of the journey.

The present invention uses not only information about possible obstacles or traffic restrictions on a given route, but also knowledge about the vehicle down to the gear ratio level. Furthermore, the calculations in the present invention are based on event probabilities. The present invention assumes that any place that affects driving, such as an intersection, pedestrian crossing, railway crossing, etc., affects driving. So a worst-case probability is calculated. However, this is performed for each alternative road. The more such places are on the road the worse the result will be.

An important element in the energy balance of a vehicle is inertial resistance. This resistance arises when the vehicle accelerates or brakes.

The value of the inertia force can be calculated from the formula:

$$F_b = m*a*(1+0.07*is_2)$$

where

$is_2$ indicates the gear ratio,
$a$ is the acceleration of the vehicle,
$m$ is the mass of the vehicle.

The ratios depend on the vehicle and engine. For example, the Fiat Punto 1.2 has gear ratios of 3.91, 2.16, 1.48, 1.12 and 0.9.

Gear ratios do not matter much when the road stretches are long. On such a long stretch, the vehicle accelerates to the maximum permitted speed, in the highest gear, and then maintains a constant speed. The energy cost of maintaining a constant speed depends mainly on resistance (aerodynamic and mechanical), which depends linearly on the speed of the vehicle. However, if the road sections are short, the vehicle will not accelerate to a speed that allows it to use the highest gear. It will therefore consume more fuel or energy.

Therefore, the analysis requires knowledge of the gear ratios. On long distances, the vehicle has lower fuel consumption because it drives in the highest gear with constant engine speed. On short distances, it accelerates all the time and then brakes. This is very disadvantageous from a fuel or energy consumption point of view.

The problem with the proposed solution is that there are thousands of different vehicles on the market with varying degrees of wear and tear and, in addition, millions of drivers with different temperaments and driving styles.

The solution could be for the navigation computer to automatically 'learn' the driver's driving style and vehicle parameters. For this, it is sufficient to use GPS to measure distance and acceleration sensors to assess driving dynamics and gearshift moments, including in automatic transmissions. Together, this makes it possible to calculate how the vehicle accelerates and how much energy it costs. The values calculated in this way can then be used to calculate the energy consumption of two alternative routes, so that the one with the lower energy consumption is selected. This data is stored in the vehicle's built-in machine learning module.

The machine learning module used in the advantageous implementation example of the invention therefore collects data that determines the user's driving style. This data includes, for example, acceleration sensor readings and data obtained from the location module (e.g. GPS). On this basis, it becomes possible to assign a certain measurable value to the driver's driving style (the driver's preferred driving dynamics).

The purpose of the method according to the present invention is to compare routes in navigation, so the weight of the vehicle can be removed from the above formula, as it is essentially the same on each route.

The acceleration can be estimated from the formula:

$$a = (v_1 - v_2)/ t_\Delta$$

where

$v_1$, $v_2$ are the initial and final speed (velocity),

$_\Delta t$ is the time interval in which the vehicle accelerates from a lower (initial) to a higher (final) speed.

It is possible to assume acceleration times and speeds for a given vehicle at which gears will be changed.

For example:

speed from 0 to 20 km/h in the 1st gear, acceleration time 3 seconds, acceleration 1.85 m/s$^2$

speed from 20 to 35 km/h in the 2nd gear, acceleration time 4 seconds, acceleration 1.04 m/s$^2$

speed from 35 to 45 km/h in the 3rd gear, acceleration time 5 seconds, acceleration 0.55 m/s$^2$

speed from 45 to 60 km/h in the 4th gear, acceleration time 8 seconds, acceleration 0.52 m/s$^2$

speed from 60 to 90 km/h in the 5th gear, acceleration time 10 seconds, acceleration 0.83 m/s$^2$

speed from 90 to 120 km/h in the 5th gear, acceleration time 20 seconds, acceleration 0.42 m/s$^2$.

If the navigation has 'learned' the vehicle parameters and the driver's driving style then the data from this learning process, stored in the machine learning module, can be used for calculations instead of the theoretical values indicated above (fixed for the vehicle).

The obtained values (either fixed, or obtained from the machine learning module - adapted to the current driver profile) then allow the energy expenditure to be calculated, for example, when the vehicle stopped at a STOP sign and then accelerated from 0 to 90 km/h by changing gears. Or when it slowed down to 60 km/h before a pedestrian crossing and then accelerated again to 90 km/h, etc.

Knowing the signs on the routes being compared makes it possible to calculate the predicted energy expenditure caused by signs, crossings, junctions, chicanes, etc.

The present invention assumes that the driver obeys the traffic laws and drives at the speeds read from the signs and specified in the traffic regulations in force in the area (maximum speeds on a given stretch of road). It is also assumed that he always changes gears in the same way when accelerating the vehicle.

Making these assumptions makes it possible to simplify the calculations, as it is sufficient to calculate once the energy expenditure (or energy equivalent) required to accelerate the vehicle from zero to 50 km/h (urban traffic), from 50 to 90 km/h (out of town onto a main road), from 50 to 120 km/h (out of town onto an motorway), from 50 to 140 km/h (out of town onto a highway), and so on.

With a choice of two routes, the sum of the energy equivalent (rather than energy, as the weight of the vehicle has been removed from the formula) for each route can be calculated and compared.

If one route is longer but there are no speed reduction signs on it and the other is shorter but there are numerous speed limits on it (e.g. passing through villages and towns), the longer one may be less energy-intensive.

In order to implement the method according to the invention, it is necessary that the device implementing this method is equipped with a location module capable of determining the current location of the device (vehicle). In addition, a necessary component of the device is a module for obtaining information from the user about the destination, i.e. the place where the user wishes to arrive.

In order to implement the method according to the invention, it is necessary that the device implementing this method is equipped with a module providing information on vehicle characteristics, such as make, engine power, acceleration, energy expenditure. This data may be permanently assigned to a particular device (e.g. in the case of its permanent installation in a particular vehicle), or the device may be equipped with a database of vehicles, engines, transmissions, etc. and obtain the necessary data on the basis of the VIN number of the vehicle. This data can be stored locally, on the device, or accessed online using known wireless communication methods.

In an advantageous implementation example, the optimisation method uses a road map that is updated continuously taking into account temporary traffic obstructions such as roadworks, traffic jams and congestion. For this purpose, the device implementing the method according to the invention can be equipped with a communication module, e.g. a GSM module.

**Key features and advantages of the present invention**

1. In order to implement the method according to the invention, it is necessary to add to the information on the road maps all traffic signs, chicanes, pedestrian crossings, etc. that affect the speed of vehicles, as well as speed limits resulting from traffic regulations that are not reflected in the signs (e.g. maximum speed on a national road, motorway, motorway, city).
2. When determining the route according to the invention, the energy equivalent required to cover the route is calculated based on the accepted data on the vehicle (gear ratios, speeds at which gears must be changed and acceleration time in a given gear).
3. When determining the route according to the invention, the energy equivalent required to cover the route is calculated based on the previously calculated energy equivalents for acceleration from 0 to 50 km/h, 0 to 90 km/h, 50 to 90 km/h, 50 to 120 km/h, 50 to 140 km/h, etc. When calculating the energy equivalent, information on energy recuperation (energy recovery) during vehicle braking can also be used.
4. A database of vehicles, engines, transmissions is created, which can be used by the navigation system to calculate the energy cost of a route, based on the VIN of the vehicle in which the navigation system is used.
5. Alternatively, the vehicle's dynamic parameters and the driver's driving style are calculated through acceleration and GPS sensor readings - this data is analysed, collected and made available by the machine learning module.

**Claims**

1. A method of determining the optimum route of a road vehicle that includes stages where:

   a) information about the current location of the vehicle is obtained from the location module;
   b) the user is asked where they want to go;
   c) information on possible routes is obtained from a road map with additional information on road restrictions, such as speed limits imposed by road signs and traffic regulations, chicanes, pedestrian crossings, intersections, level crossings;
   d) information on vehicle characteristics such as make, engine power, acceleration, energy expenditure is obtained from a database of vehicles, engines, transmissions, etc,
   e) based on the information obtained, the optimal route is determined, wherein the optimal route is minimising the energy cost of the journey.

2. The method according to claim 1, **characterised in that it** comprises an additional step in which the data determining the user's driving style collected from acceleration and GPS sensor readings is extracted from the machine learning module.

3. The method according to claim 1 or 2, **characterised in that** the road map is updated in real time taking into account temporary traffic obstructions such as roadworks, traffic jams and congestion.

4. The method according to any of the claims 1 to 3, **characterised in that** the use of vehicle performance data includes braking energy recuperation data.

5. The method according to any of claims 1-4, **characterised in that** the optimal travel route minimises the expected value of the energy cost of travelling the route.

6. The method according to any of claims 1-4, **characterised in that** the optimal travel route minimises the maximum energy cost of travelling the route.

**Europäisches Patentamt**
**European Patent Office**
**Office européen des brevets**

# EUROPEAN SEARCH REPORT

**Application Number**

EP 23 46 1626

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2011/309926 A1 (EIKELENBERG NICOLE LEONARDA WILHELMINA [NL] ET AL) 22 December 2011 (2011-12-22) * paragraphs [0022] – [0067] * ----- | 1-6 | INV. G01C21/34 B60W40/09 |
| X | US 2021/012584 A1 (SAAVEDRA ROMÁN JOSÉ GUILLERMO [US]) 14 January 2021 (2021-01-14) * paragraphs [0005], [0006], [0013], [0035], [0036], [0052], [0056] * ----- | 1-6 | |
| X | US 8 706 416 B2 (WANG QING [US]; PHILLIPS ANTHONY MARK [US] ET AL.) 22 April 2014 (2014-04-22) * column 1, line 66 – column 4, line 39; figures 1,5 * ----- | 1-6 | |
| A | US 9 840 160 B2 (RENAULT SAS [FR]) 12 December 2017 (2017-12-12) * column 2, lines 30-59 * ----- | 1-6 | |
| | | | **TECHNICAL FIELDS SEARCHED (IPC)** G01C B60W |

The present search report has been drawn up for all claims

| Place of search | Date of completion of the search | Examiner |
|---|---|---|
| The Hague | 28 November 2023 | Gagin, Thibaut |

EPO FORM 1503 03.82 (P04C01)

## ANNEX TO THE EUROPEAN SEARCH REPORT
## ON EUROPEAN PATENT APPLICATION NO.

EP 23 46 1626

This annex lists the patent family members relating to the patent documents cited in the above-mentioned European search report.
The members are as contained in the European Patent Office EDP file on
The European Patent Office is in no way liable for these particulars which are merely given for the purpose of information.

28-11-2023

| Patent document cited in search report | | | Publication date | Patent family member(s) | | Publication date |
|---|---|---|---|---|---|---|
| US 2011309926 | A1 | | 22-12-2011 | CN | 102328658 A | 25-01-2012 |
| | | | | DE | 102010030309 A1 | 22-12-2011 |
| | | | | US | 2011309926 A1 | 22-12-2011 |
| US 2021012584 | A1 | | 14-01-2021 | NONE | | |
| US 8706416 | B2 | | 22-04-2014 | CN | 103364006 A | 23-10-2013 |
| | | | | US | 2013261966 A1 | 03-10-2013 |
| US 9840160 | B2 | | 12-12-2017 | EP | 2785553 A2 | 08-10-2014 |
| | | | | FR | 2983614 A1 | 07-06-2013 |
| | | | | JP | 6320928 B2 | 09-05-2018 |
| | | | | JP | 2015512027 A | 23-04-2015 |
| | | | | US | 2014324328 A1 | 30-10-2014 |
| | | | | WO | 2013079694 A2 | 06-06-2013 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009067350 A

- US 2009254266 A1